# FASCICULE DE BREVET EUROPEEN

(11) **EP 4 370 840 B1**
(45) Date de publication et mention de la délivrance du brevet: **24.09.2025**
(21) Numéro de dépôt: 22741789.6
(22) Date de dépôt: 15.07.2022
(51) Int. Cl.: F24H 1/43, F24H 9/00, F24H 8/00, F28D 7/02

(54) **ECHANGEUR DE CHALEUR À CONDENSATION**
KONDENSATIONSWÄRMETAUSCHER
CONDENSATION HEAT EXCHANGER

(30) Priorité: 16.07.2021 FR 2107687
(43) Date de publication de la demande: 22.05.2024
(73) Titulaire: SERMETA, 29600 Morlaix (FR)
(72) Inventeur: LE MER, Joseph, 29252 PLOUEZOCH (FR)
(74) Mandataire: Regimbeau
(86) Numéro de dépôt international: PCT/EP2022/069917
(87) Numéro de publication internationale: WO 2023/285682

(56) Documents cités:
- EP-A1- 3 141 838
- FR-A1- 2 846 075
- FR-A1- 2 942 866

## Description

### DOMAINE DE L'INVENTION

L'invention se situe dans le domaine des échangeurs de chaleur à condensation.

La présente invention concerne plus précisément la structure du déflecteur, disposé entre la chambre de combustion et la chambre de condensation de cet échangeur, ainsi que le mode de fixation de ce déflecteur.

### ETAT DE LA TECHNIQUE

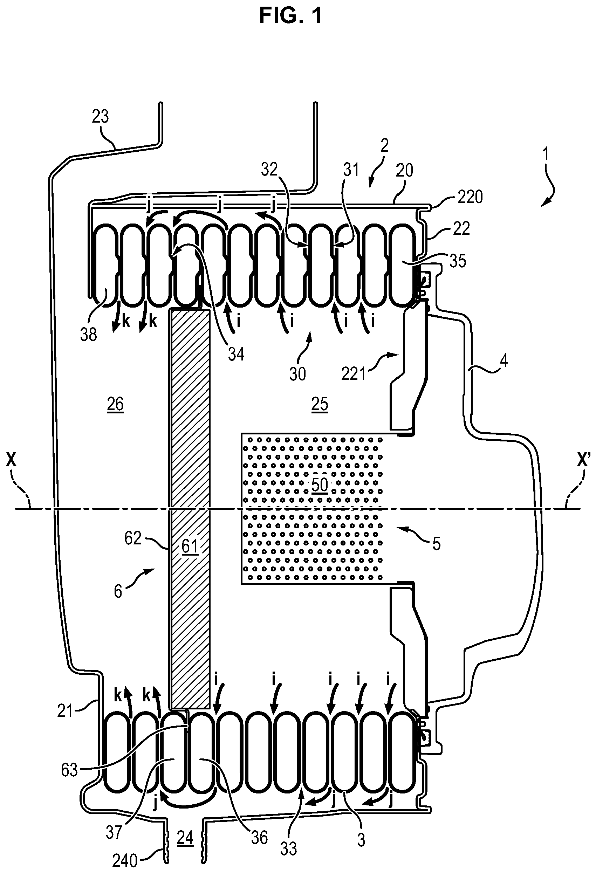

La figure 1 jointe représente une vue en coupe d'un exemple de réalisation d'un échangeur de chaleur à condensation, conforme à l'état de la technique.

Sur cette figure, on peut voir que l'échangeur de chaleur à condensation 1 comprend une enveloppe 2, un tube 3 enroulé en spirale, une porte 4, des moyens 5 d'amenée ou de production de gaz chauds et un déflecteur 6.

Cet échangeur de chaleur 1 s'étend selon un axe longitudinal X-X'. Sur la figure 1, il est représenté dans sa position normale d'utilisation.

L'enveloppe 2 comprend un corps 20 tubulaire, d'axe X-X', fermé à son extrémité arrière par un fond 21 et comprenant une façade 22 à son extrémité avant. Par convention, dans la suite de la description et des revendications le terme « face avant » désigne une face tournée vers l'avant de l'échangeur, c'est-à-dire vers la façade 22 tandis que le terme « face arrière » désigne une face tournée vers l'arrière de l'échangeur, c'est à dire vers le fond 21.

L'enveloppe 2 comprend une manchette 23 d'évacuation des gaz brûlés. En outre, la partie inférieure de l'enveloppe 2 est légèrement en pente, de façon à permettre l'évacuation des condensats par gravité, via un orifice de sortie 24, connecté à un conduit d'évacuation 240 de ces condensats.

La façade 22 présente à sa périphérie, un rebord 220, qui est fixé, de préférence soudé ou serti, de manière étanche aux gaz, sur le bord avant du corps 20 tubulaire. La façade 22 comprend une ouverture centrale 221, apte à être obturée par la porte 4.

La porte 4 supporte dans sa partie centrale, un brûleur 50, par exemple un brûleur à gaz ou à fioul, qui constitue un exemple de réalisation d'un moyen de production de gaz chauds 5. Ce brûleur 50 pourrait être remplacé par des moyens d'amenée d'un gaz chaud, produit en dehors de l'enveloppe 2 et propulsé à l'intérieur de celle-ci, par exemple à l'aide d'un ventilateur.

Le tube 3 est enroulé sur lui-même en hélice, de façon à former un enroulement hélicoïdal 30, d'axe longitudinal X-X'. Il présente deux extrémités formant une embouchure d'entrée et une embouchure de sortie, non visibles sur les figures.

Il est réalisé dans un matériau thermiquement bon conducteur, notamment en métal, de façon avantageuse en acier inoxydable. Il est destiné à recevoir un fluide à réchauffer, tel que de l'eau.

Le tube 3 présente une section droite ovale (ce cas n'étant pas représenté sur la figure) ou une section droite rectangulaire dont les deux côtés longitudinaux sont aplatis et dont le grand axe est perpendiculaire ou approximativement perpendiculaire à l'axe X-X' de l'enroulement hélicoïdal. Le tube 3 présente ainsi une face avant 31 et une face arrière 32. Ces faces 31, 32 sont planes ou sensiblement planes en fonction de la section.

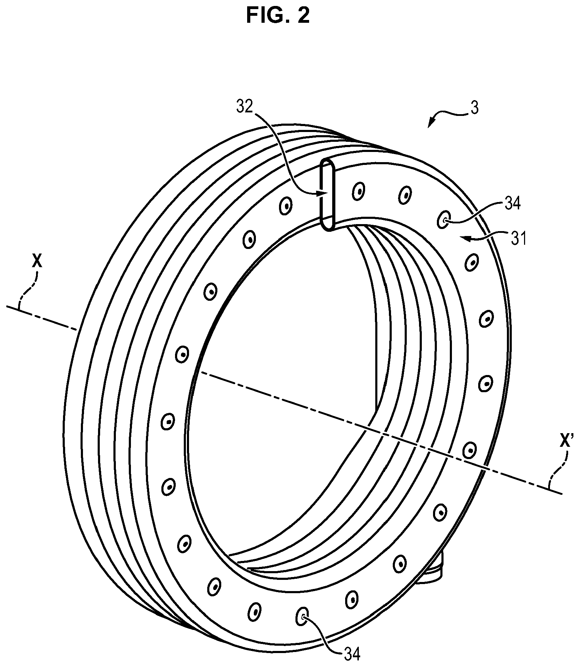

Il existe un interstice 33 de valeur calibrée, entre deux spires voisines du tube 3. Cet interstice 33 peut être obtenu par exemple à l'aide de bossages 34 formés sur l'une des deux faces planes du tube 3, ici par exemple la face avant 31. Ces bossages apparaissent mieux sur la figure 2 jointe.

Le déflecteur 6 est disposé à l'intérieur de l'enroulement hélicoïdal 30 du tube 3, perpendiculairement à l'axe X-X', de façon à ménager à l'intérieur de l'enveloppe 2, d'une part une chambre de combustion 25, qui s'étend entre la porte 4 et le déflecteur 6 et qui contient le brûleur 50, et d'autre part, une chambre de condensation 26, qui s'étend entre le déflecteur 6 et le fond 21 de l'enveloppe 2.

Par convention, la première spire de la partie de l'enroulement hélicoïdal du tube 3 se trouvant dans la chambre de combustion 25 est celle située au contact de la façade 22 et elle est référencée 35, tandis que la dernière spire de cette même partie est référencée 36. De façon similaire la dernière spire de la partie de l'enroulement hélicoïdal du tube 3 se trouvant dans la chambre de condensation 26 est celle située au contact du fond 21 et elle est référencée 38, tandis que la première spire de cette même partie est référencée 37.

Le déflecteur 6 comprend un disque 61 en matériau thermiquement isolant, porté par une armature en tôle métallique mince 62, cette dernière étant munie d'une collerette périphérique radiale 63.

Le déflecteur 6 est monté à l'intérieur de l'enroulement 30 du tube 3, de façon que sa collerette 63 soit insérée et positionnée de manière étanche aux gaz, dans l' interstice 33 existant entre la dernière spire 36 du tube 3 se trouvant dans la chambre de combustion 25 et la première spire 37 du tube 3 se trouvant dans la chambre de condensation 26.

Le fonctionnement de cet échangeur de chaleur 1 est le suivant. Le fluide (eau) à réchauffer circule à contre-courant des gaz chauds. Il est introduit dans la dernière spire 38 et ressort de l'enroulement hélicoïdal par la première spire 35.

Les gaz chauds, produits par le brûleur 50 à l'intérieur de la chambre de combustion 25, ne peuvent sortir de celle-ci qu'en passant dans les interstices 33, de l'intérieur vers l'extérieur, (flèches i). Ce faisant, ils réchauffent les parois du tube 3 et donc l'eau qui y circule. Lorsque les gaz chauds parviennent au contact du corps 20 de l'enveloppe 2, ils sont dirigés vers la chambre de condensation 26 (flèches j), puis ils retournent à l'intérieur de la chambre de condensation 26, en traversant les interstices 33, cette fois-ci de l'extérieur vers l'intérieur (flèches k).

Comme on peut le voir sur la figure 1, compte tenu du mode de montage du déflecteur 6, il n'y a pas de passage de gaz chauds entre la dernière spire 36 et la collerette 63 ni entre la première spire 37 et la collerette 63.

L'échange thermique entre les gaz chauds et l'eau circulant dans la première spire 37 et dans la dernière spire 36 est donc moins bon et le rendement global de l'échangeur 1 est donc moindre.

Par ailleurs, cette obturation du passage entre les deux spires 36 et 37 génère une perte de charge des gaz chauds circulant dans l'enveloppe 2.

On connait également d'après le document FR 2 942 866, un échangeur de chaleur à condensation comprenant un déflecteur discoïde, disposé dans cet échangeur pour former une chambre de combustion et une chambre de condensation. Ce déflecteur comprend un disque thermiquement isolant, porté par une armature munie d'une collerette périphérique.

Toutefois, l'entretoise formant l'espace entre les spires du tube et cette collerette ne sont pas positionnées à l'intérieur de l'enroulement du tube de l'échangeur, au même endroit que dans l'invention, de sorte que la circulation des gaz chauds n'est pas la même.

### EXPOSE DE L'INVENTION

Un but de l'invention est donc de résoudre les inconvénients précités, et notamment d'améliorer l'échange thermique entre les gaz chauds et l'eau circulant dans la première spire du tube côté chambre de condensation et dans la dernière spire côté chambre de combustion et d'accroître le nombre de passages entre les spires.

Un autre but de l'invention est de diminuer les pertes de charge des gaz chauds circulants dans les interstices entre les spires du tube.

A cet effet, l'invention concerne un échangeur de chaleur à condensation comprenant :
- au moins un tube, enroulé en hélice de façon à former un enroulement hélicoïdal et à l'intérieur duquel circule un fluide à réchauffer, tel que de l'eau, ce tube étant réalisé dans un matériau thermiquement bon conducteur et présentant une face avant et une face arrière opposées, planes ou sensiblement planes, qui sont perpendiculaires, ou approximativement perpendiculaires à l'axe dudit enroulement hélicoïdal, cet enroulement étant agencé de façon à ménager un interstice entre les spires adjacentes,
- une enveloppe étanche aux gaz à l'intérieur de laquelle ledit au moins un tube est monté, cette enveloppe comprenant un fond et une façade sur laquelle est montée une porte, cette enveloppe étant munie d'une manchette d'évacuation des gaz brulés,
   la face avant du tube étant tournée vers la façade de l'enveloppe et la face arrière du tube étant tournée vers le fond de l'enveloppe,
- des moyens d'amenée et/ou de production d'un gaz chaud à l'intérieur de ladite enveloppe, tel un brûleur à gaz ou à fioul, montés sur ladite porte,
- un déflecteur discoïde étant disposé à l'intérieur de l'enroulement hélicoïdal du tube, de façon à ménager à l'intérieur de l'enveloppe, d'une part une chambre de combustion entre la porte et ledit déflecteur et d'autre part, une chambre de condensation entre ledit déflecteur et le fond de l'enveloppe,
ce déflecteur comprenant un disque en matériau thermiquement isolant, porté par une armature en tôle métallique, munie d'une collerette périphérique, cette collerette étant intercalée dans un interstice entre deux spires successives dudit enroulement et le diamètre extérieur du déflecteur discoïde étant inférieur au diamètre intérieur de l'enroulement hélicoïdal pris au niveau des extrémités intrados de ses spires, de façon à ménager, entre le bord dudit déflecteur discoïde et l'extrémité intrados de la première spire de l'enroulement se trouvant dans la chambre de condensation, un passage dit « de circulation des gaz chauds », ladite collerette présentant une face avant tournée vers la façade de l'enveloppe et une face arrière tournée vers le fond de l'enveloppe, opposées.

Conformément à l'invention, ladite face avant est positionnée de manière étanche aux gaz contre la face arrière de la dernière spire de l'enroulement se trouvant dans la chambre de combustion, au moins un élément formant entretoise est disposé entre la face arrière de ladite collerette et la face avant de la première spire dudit enroulement se trouvant dans la chambre de condensation, de façon à ménager entre elles un interstice dit « de circulation des gaz », de sorte que ces gaz chauds traversent radialement ou approximativement radialement ledit interstice de circulation des gaz, de l'extérieur vers l'intérieur, puis traversent axialement ledit passage de circulation des gaz de l'avant vers l'arrière, en direction de la chambre de condensation.

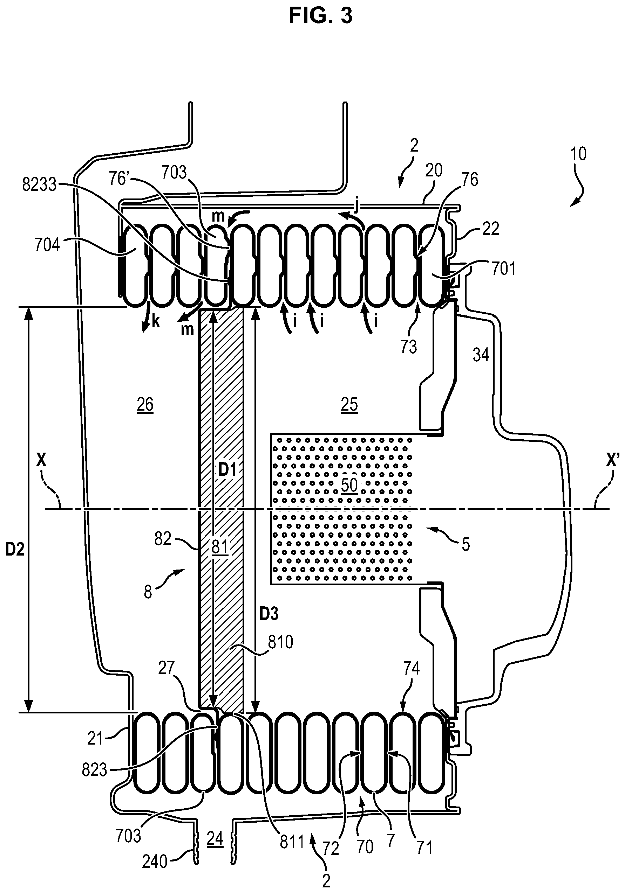

Grâce aux caractéristiques de l'invention, les gaz chauds peuvent circuler entre la dernière spire du côté chambre de combustion et la première spire du tube coté chambre de condensation. L'échange thermique s'en trouve amélioré. Ainsi, dans l'exemple de réalisation représenté sur les figures 1 et 3, où il y a quatre spires dans la chambre de condensation, alors qu'il n'y avait que trois passages pour les gaz chauds entre ces quatre spires dans l'état de la technique (voir figure 1), il y a désormais quatre passages avec la solution de l'invention (voir figure 3), soit une augmentation de 33% de passage de gaz chauds.

En outre, le fait de créer ledit interstice de circulation des gaz et ledit passage de circulation des gaz chauds permet de diminuer les pertes de charge des gaz circulant. De ce fait, le ventilateur (non représenté sur les figures) qui permet de propulser le mélange air/gaz dans le brûleur 50 ou le ventilateur des moyens 5 d'amenée d'un gaz chaud, n'a pas besoin d'être aussi puissant que celui de l'état de la technique et sa consommation électrique est moindre.

Selon d'autres caractéristiques avantageuses et non limitatives de l'invention, prises seules ou en combinaison :
- la face avant de la première spire de l'enroulement se trouvant dans la chambre de condensation est munie d'un épaulement annulaire qui s'étend depuis l'extrémité intrados de cette spire et ledit au moins un élément formant entretoise s'étend entre ledit épaulement annulaire et ladite face arrière de la collerette, de façon à former ledit interstice de circulation ;
- la face arrière de la dernière spire de l'enroulement se trouvant dans la chambre de combustion est munie d'un épaulement annulaire qui s'étend depuis l'extrémité intrados de cette spire, la face avant de la collerette est disposée de manière étanche aux gaz contre cet épaulement annulaire ;
- ledit élément formant entretoise est constitué d'un élément saillant, tel un embouti, formé sur la face arrière de la collerette, cet élément saillant étant en appui contre la face avant de la première spire de l'enroulement se trouvant dans la chambre de condensation, ou contre l'épaulement annulaire de cette face avant, de façon à ménager ledit interstice de circulation des gaz ;
- ledit élément formant entretoise est constitué d'un élément saillant, tel un bossage formé dans la paroi du tube, cet élément saillant faisant saillie depuis la face avant de la première spire de l'enroulement se trouvant dans la chambre de condensation ou depuis l'épaulement annulaire de cette face avant et cet élément saillant est en appui contre ladite face arrière de la collerette, de façon à ménager ledit interstice de circulation des gaz ;
- ledit élément formant entretoise est constitué d'un peigne dont une dent est intercalée entre la face avant de la première spire de l'enroulement se trouvant dans la chambre de condensation et la face arrière de ladite collerette, de façon à ménager ledit interstice de circulation des gaz ;
- ladite armature en tôle métallique du déflecteur discoïde présente un fond circulaire bordé par un rebord annulaire perpendiculaire à ce fond, de façon à ménager une cavité discoïde de réception du disque en matériau thermiquement isolant et la collerette périphérique fait saillie vers l'extérieur depuis ce rebord annulaire ;
- le disque en matériau thermiquement isolant présente une extrémité saillante, qui fait saillie depuis la cavité discoïde vers l'intérieur de la chambre de combustion et le diamètre de cette extrémité saillante est égal au diamètre intérieur de l'enroulement hélicoïdal du tube, pris au niveau des extrémités intrados des spires du tube, de sorte que le bord latéral de cette extrémité saillante est en contact étanche aux gaz avec l'extrémité intrados de la dernière spire du tube se trouvant dans la chambre de combustion, en empêchant ainsi le passage des gaz chauds entre les deux ;
- l'échangeur comprend un tube unique formant l'enroulement hélicoïdal et la collerette périphérique de l'armature en tôle métallique du déflecteur est hélicoïdale ;
- l'échangeur comprend au moins deux tubes enroulés en hélice pour former au moins deux enroulements hélicoïdaux adjacents, l'un étant disposé dans la chambre de combustion et l'autre dans la chambre de condensation et la collerette périphérique de l'armature en tôle métallique du déflecteur, disposée entre lesdits deux enroulements adjacents, est annulaire et perpendiculaire à l'axe des deux enroulements hélicoïdaux adjacents.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 est une vue en coupe longitudinale d'un exemple de réalisation d'un échangeur de chaleur à condensation, conforme à l'état de la technique.
La figure 2 est une vue en perspective d'une partie du tube de l'échangeur de chaleur de la figure 1.
La figure 3 est une vue en coupe longitudinale d'un premier mode de réalisation d'un échangeur de chaleur à condensation, conforme à l'invention.
La figure 4 est une vue en perspective d'une partie du tube de l'échangeur, situé dans la chambre de condensation de l'échangeur de chaleur conforme à l'invention.
La figure 5 est une vue en perspective d'un premier mode de réalisation du déflecteur, destiné à être positionné dans l'échangeur de chaleur conforme à l'invention.
La figure 6 est une vue en perspective d'un second mode de réalisation du déflecteur, destiné à être positionné dans l'échangeur de chaleur conforme à l'invention.
La figure 7 est une vue de détail de la partie inférieure de l'échangeur de chaleur à condensation de la figure 3 montrant une partie d'un déflecteur, les deux dernières spires du tube se trouvant dans la chambre de combustion et les deux premières spires du tube se trouvant dans la chambre de condensation.
La figure 8 est une vue de détail, similaire à la figure 7, mais représentant un deuxième mode de réalisation d'un échangeur de chaleur à condensation conforme à l'invention.
La figure 9 est une vue de détail, similaire à la figure 7, mais représentant un troisième mode de réalisation d'un échangeur de chaleur à condensation conforme à l'invention.
La figure 10 est une vue de détail, similaire à la figure 7, mais représentant un quatrième mode de réalisation d'un échangeur de chaleur à condensation conforme à l'invention.
La figure 11 est une vue de détail, similaire à la figure 7, mais représentant un cinquième mode de réalisation d'un échangeur de chaleur à condensation conforme à l'invention.
La figure 12 est une vue en perspective d'un élément formant entretoise.

### DESCRIPTION DETAILLEE DE L'INVENTION

L'échangeur de chaleur conforme à l'invention, référencé 10, va maintenant être décrit plus en détails en faisant référence à la figure 3. Les éléments communs avec l'échangeur 1 de l'état de la technique, qui ont été décrits précédemment en liaison avec les figures 1 et 2, portent les mêmes références numériques et ne seront pas décrits de nouveau en détails.

L'échangeur de chaleur 10 diffère du précédent par la structure du tube à proximité du déflecteur et par la structure de ce déflecteur. Dans cet échangeur 10, le tube porte la référence 7 et le déflecteur la référence 8.

Comme représenté sur la figure 3, l'échangeur de chaleur 10 peut comprendre un unique tube 7, enroulé en hélice autour de l'axe X-X', de façon à former un enroulement hélicoïdal 70. Il présente deux extrémités formant une embouchure d'entrée et une embouchure de sortie non visibles sur les figures. Il est réalisé dans un matériau thermiquement bon conducteur, notamment en métal, de façon avantageuse en acier inoxydable. Le fluide à réchauffer y circule.

Le tube 7 présente une section droite, de préférence oblongue, (par exemple de forme ovale ou de forme ovale dont les deux côtés longitudinaux sont aplatis ou encore une section droite rectangulaire), de façon à présenter deux faces latérales opposées qui sont donc planes ou sensiblement planes, respectivement une face avant 71 et une face arrière 72, ces faces étant perpendiculaires ou approximativement perpendiculaires à l'axe X-X' de l'enroulement 70.

Les différentes spires du tube 7 sont écartées entre elles d'un interstice 73, de largeur L calibrée.

L'extrémité intrados de chaque spire de l'enroulement hélicoïdal 70 (c'est-à-dire l'extrémité située vers l'intérieur de l'enroulement) est référencée 74 et présente une forme en arc de cercle rectiligne. Il en est de même pour l'extrémité extrados opposée, référencée 75.

L'interstice 73 est calibré à l'aide d'un élément formant entretoise.

De façon avantageuse, l'interstice 73 peut-être calibré à l'aide de bossages 76 (ou corrugations), formés sur l'une des faces plates du tube 7, (par exemple ici la face avant 71), dans la paroi de ce tube 7. Ces bossages 76 sont disposés sensiblement radialement par rapport à l'axe X-X'. Ils sont identiques aux bossages 34 du tube 3. Chaque bossage 76 vient en appui contre la face (non munie de bossages) de la spire adjacente. Ces bossages ont une hauteur bien déterminée et permettent de calibrer de manière précise la largeur de l'interstice 73.

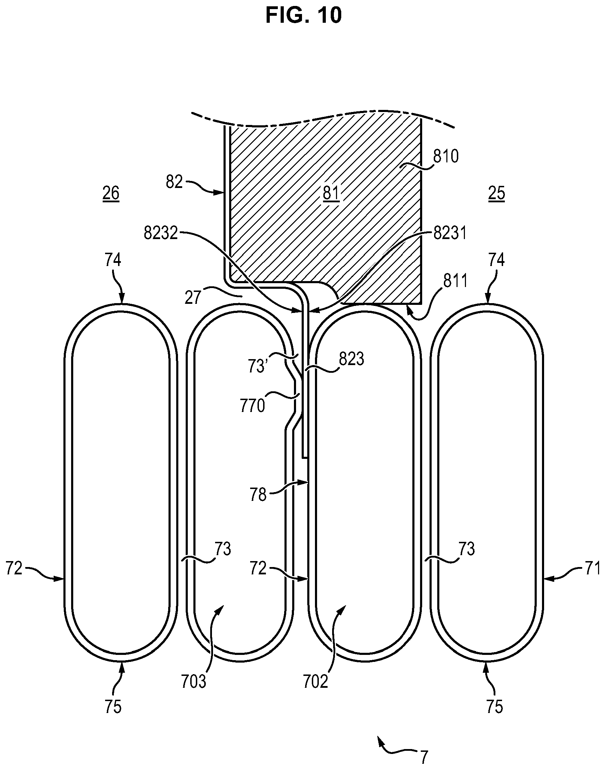

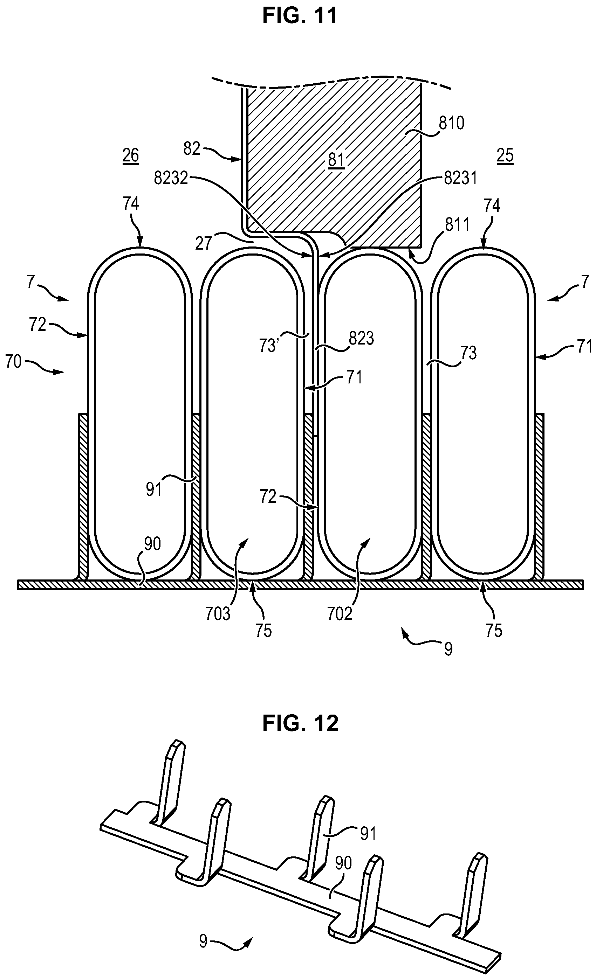

L'interstice 73 peut également être formé avec un peigne 9, tel que celui représenté sur les figures 10 et 11. Un tel peigne présente une barre centrale 90 et des languettes perpendiculaires 91 (dents du peigne). Ce peigne 9 est disposé par rapport à l'enroulement 70 de façon que chaque dent 91 soit insérée enter deux spires successives de l'enroulement 70. De préférence, on utilise au moins deux peignes 9 disposés de part et d'autre de l'enroulement 70.

La première spire et la dernière spire de la partie de l'enroulement hélicoïdal 70 se trouvant dans la chambre de combustion 25 portent respectivement les références numériques 701 et 702, tandis que la première spire et la dernière spire de la partie de l'enroulement 70 se trouvant dans la chambre de condensation 26 portent respectivement les références numériques 703 et 704 (voir figure 3).

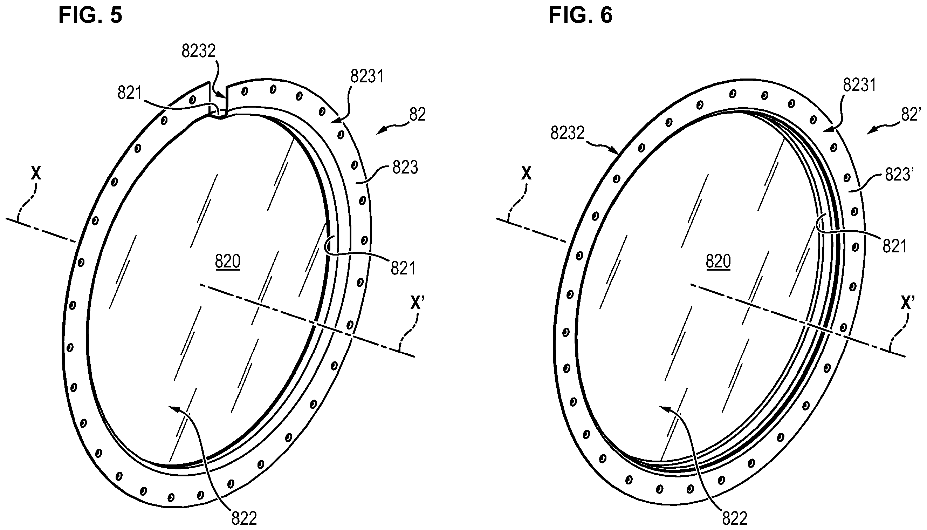

Le déflecteur 8 comprend un disque 81 en matériau thermiquement isolant, porté par une armature en tôle métallique mince 82. Comme cela apparaît mieux sur les figures 5 et 6, l'armature 82 présente un fond circulaire 820 bordé d'un rebord annulaire 821, perpendiculaire au fond. Le fond 820 et le rebord 821 délimitent ensemble une cavité discoïde 822, dimensionnée pour recevoir et maintenir le disque 81.

Dans le cas où l'échangeur de chaleur 10 comprend un unique tube 7 enroulé en hélice, l'armature 82 est conformée comme représenté sur la figure 5 et présente une collerette 823, qui s'étend sensiblement radialement vers l'extérieur depuis le rebord annulaire 821 et cette collerette 823 est hélicoïdale. Cette collerette 823 peut ainsi être insérée entre deux spires hélicoïdales successives du même tube.

L'échangeur 10 peut également comprendre plusieurs tubes 7 enroulés chacun en hélice autour de l'axe X-X', et disposés côte à côte de façon que leurs axes soient coaxiaux. Ainsi par exemple, il est possible d'avoir un premier enroulement de tube, disposé dans la chambre de condensation 26, et à l'intérieur duquel circule un premier fluide à réchauffer et d'avoir un deuxième enroulement de tube dans la chambre de combustion 25, à l'intérieur duquel circule le même premier fluide, voire éventuellement un deuxième fluide à réchauffer.

Dans le cas où l'échangeur de chaleur 10 comprend au moins deux tubes 7 enroulés en hélice, disposés côte à côte, l'armature du déflecteur est légèrement différente de la précédente. Elle porte la référence 82' et est représentée sur la figure 6. Elle présente une collerette 823', qui est annulaire et qui s'étend radialement vers l'extérieur depuis le rebord annulaire 821. Ce rebord 821 présente alors une hauteur constante. La collerette 823' est perpendiculaire à l'axe X-X'.

Différents modes de réalisation de l'invention permettant de positionner le déflecteur 8 sur le tube 7, tout en ménageant un espace, pour le passage des gaz, entre ce déflecteur et la première spire du tube 7 se trouvant dans la chambre de condensation 26, vont maintenant être décrits.

Dans ces différents modes de réalisation et à des fins de simplification, on a uniquement décrit le cas où l'échangeur de chaleur 10 comprend un unique enroulement 70 et où le déflecteur 8 comprend une armature 82, telle que représentée sur la figure 5. Toutefois, tous ces modes de réalisation pourraient également être mis en œuvre avec au moins deux enroulements différents, l'un monté dans la chambre de combustion 25 et l'autre dans la chambre de condensation 26, de part et d'autre d'un déflecteur 8 qui comprend alors une armature 82', telle que représentée sur la figure 6.

Un premier mode de réalisation de la collerette du déflecteur 8 et du tube 7 va maintenant être décrit plus en détails en faisant référence aux figures 3 à 5 et 7.

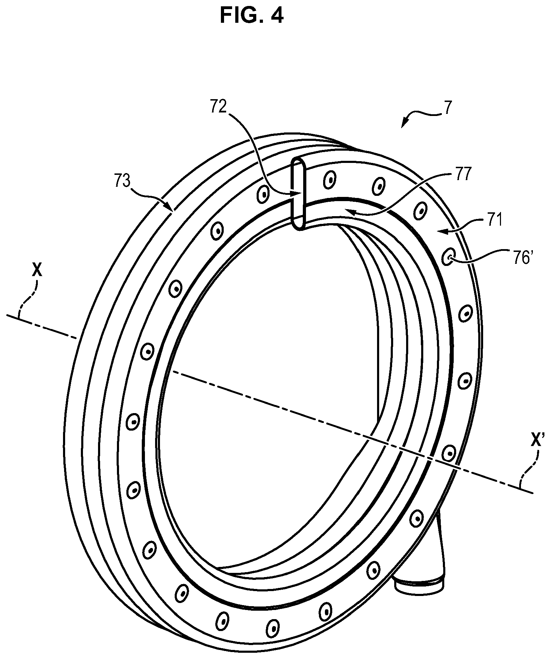

La face avant 71 de la première spire 703 présente un épaulement annulaire 77. Cet épaulement est annulaire en ce qu'il s'étend sur le tour de la première spire 703 (voir figure 4).

Cet épaulement annulaire 77 s'étend depuis l'extrémité intrados 74, de préférence entre un tiers et la moitié de la hauteur H de ladite première spire 703. La largeur L1 entre la face arrière 72 de la dernière spire 702 et la face avant 71 de la première spire 703, prise au niveau de l'épaulement 77 est donc supérieure à la largeur L d'un interstice 73.

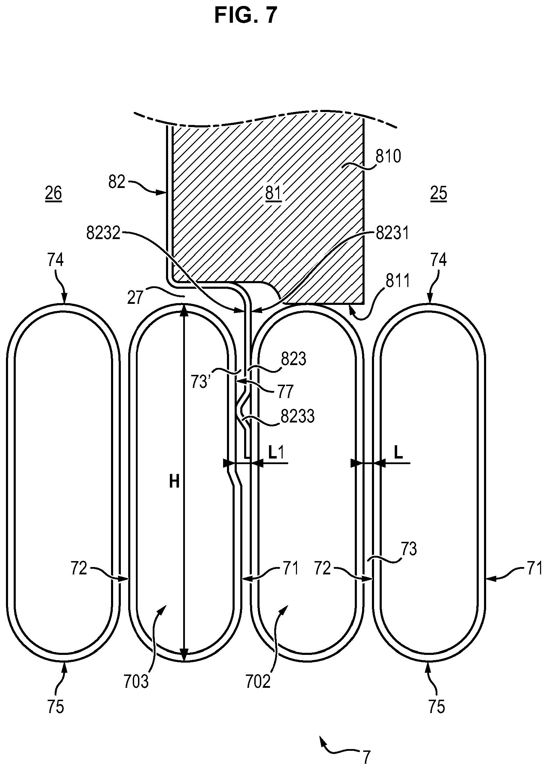

En raison de la présence de cet épaulement 77, les bossages prévus sur la face avant 71 de la première spire 703 sont légèrement décalés vers l'extrados de la spire, à l'endroit où il n'y a pas d'épaulement 77, et portent la référence 76'. En raison du plan de coupe, ces bossages 76' ne sont pas visibles sur la figure 7 mais le sont sur les figures 3 et 4. Les bossages 76' sont en appui contre la face arrière 72 de la dernière spire 702.

Le tube 7 est avantageusement obtenu par hydroformage, ce qui permet de réaliser et de positionner précisément l'épaulement 77 et les bossages 76, 76'.

La collerette 823 de l'armature 82 présente une face avant 8231, tournée vers la façade 22 et une face arrière opposée 8232. La face arrière 8232 présente au moins un élément saillant 8233, par exemple en forme de picot, de préférence plusieurs. Ces picots sont avantageusement obtenus par emboutissage de la face avant 8231. Ils sont répartis, de préférence uniformément, sur toute la périphérie de la collerette 823 et jouent le rôle d'entretoise.

Le déflecteur 8 est monté à l'intérieur de l'enroulement 70, de façon que la collerette 823 soit insérée entre la face arrière 72 de la dernière spire 702 et l'épaulement 77 de la première spire 703 et de façon que le ou les éléments saillants 8233 soit(soient) en appui contre cet épaulement 77 et ménage ainsi un interstice 73', dit "de circulation de gaz", entre l'épaulement 77 et la face arrière 72 de la dernière spire 702. En outre, l'insertion de la collerette 823 est faite de façon que sa face avant 8231 soit positionnée (plaquée), de manière étanche aux gaz contre la face arrière plane 72 de la dernière spire 702. La collerette 823 est ainsi pincée entre les deux spires 702 et 703 successives. Les gaz chauds circulent radialement dans cet interstice 73' de l'extérieur vers l'intérieur de l'enroulement 70 (voir flèche m en figure 3).

De plus, le diamètre extérieur D1 du déflecteur 8, plus précisément ici le diamètre extérieur de la cavité discoïde 822 de l'armature 82, pris au niveau de la face extérieure du rebord 821 est inférieur au diamètre intérieur D2 de l'enroulement hélicoïdal 70, mesuré au niveau des extrémités intrados 74 des spires, de façon à aménager un passage annulaire axial, dit « passage de circulation des gaz » 27, entre le rebord 821 et l'extrémité intrados de la première spire 703. Les gaz chauds circulent axialement dans ce passage 27 de l'avant vers l'arrière (voir flèche n en figure 3).

Ce passage de circulation des gaz 27 met en communication l'interstice de circulation de gaz 73' à la chambre de condensation 26. Ainsi, et contrairement à ce qui était le cas dans l'état de la technique, les gaz chauds peuvent circuler entre la dernière spire 702 et la première spire 703, en augmentant ainsi les échanges thermiques avec le fluide à réchauffer (par exemple l'eau) qui circule à l'intérieur du tube 7.

De façon avantageuse, le disque 81 en matériau thermiquement isolant est plus épais que le rebord annulaire 821, de sorte qu'il présente une extrémité saillante 810 qui fait saillie en direction de la chambre de combustion 25 (voir figure 3). De façon avantageuse, cette extrémité saillante 810 présente un diamètre D3, qui est égal au diamètre intérieur D2 de l'enroulement hélicoïdal 70, de sorte que le bord latéral 811 de cette extrémité 810 vient au contact de l'extrémité intrados 74 de la dernière spire 702, en empêchant ainsi le passage des gaz chauds à cet endroit.

Par ailleurs, on notera que l'épaulement 77, qui est disposé en regard de la collerette 823, permet d'obtenir un espace de laminage constant avec la dernière spire 702, non réduit par l'épaisseur de la tôle de la collerette 823.

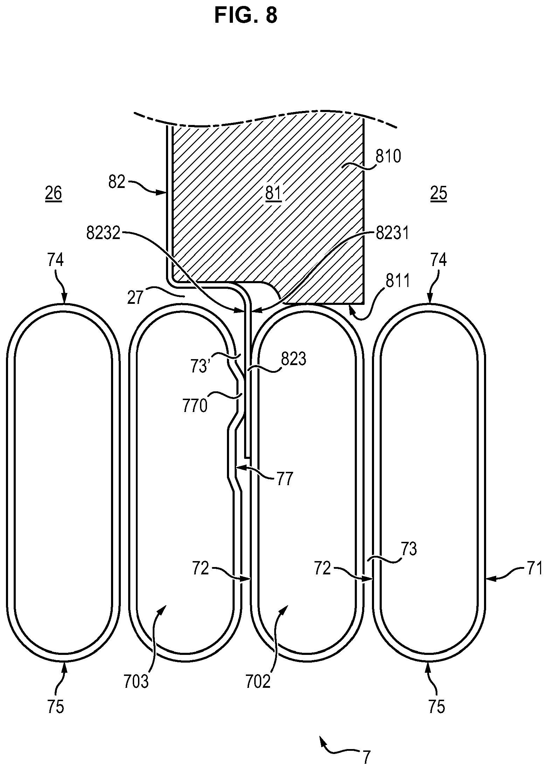

Un deuxième mode de réalisation de la collerette du déflecteur 8 et du tube 7 va maintenant être décrit plus en détail en faisant référence à la figure 8.

Ce mode de réalisation diffère du premier en ce que la collerette 823 ne présente pas d'éléments saillants et en ce que la première spire 703 présente en revanche au moins un élément saillant 770 (entretoise), de préférence plusieurs, formés sur l'épaulement annulaire 77. Ces éléments saillants 770 sont de préférence disposée radialement et régulièrement sur l'épaulement 77. Comme précédemment, la face avant 8231 de la collerette 823 est positionnée (plaquée) de manière étanche aux gaz contre la face arrière plane 72 de la dernière spire 702. Par ailleurs, les éléments saillants 770 (qui sont de préférence des bossages) viennent en butée contre la face arrière 8232 de la collerette 823, ce qui permet de ménager l'interstice de circulation des gaz 73'.

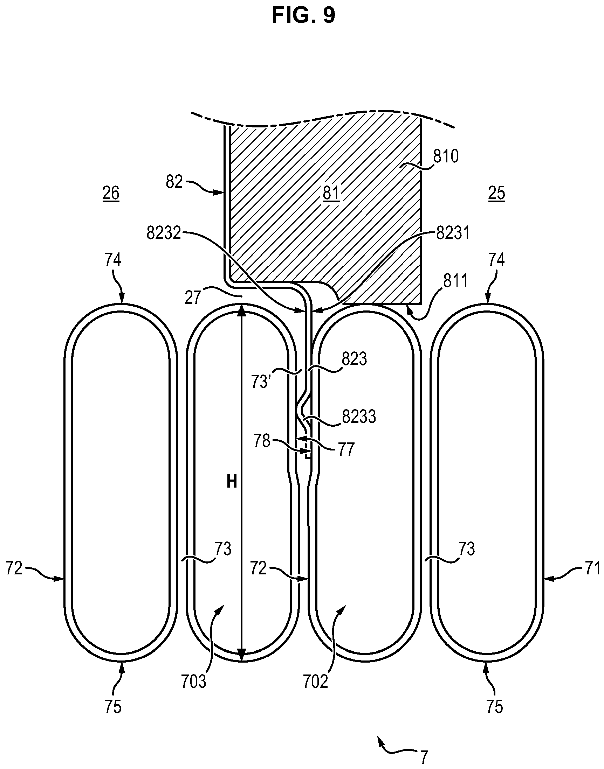

Un troisième mode de réalisation de la collerette 823 du déflecteur 8 et du tube 7 va maintenant être décrit en faisant référence à la figure 9. Il diffère simplement du premier mode de réalisation décrit en liaison avec la figure 7, en ce que la face arrière 72 de la dernière spire 702 côté chambre de combustion présente un épaulement annulaire 78. De préférence, cet épaulement annulaire 78 s'étend depuis l'extrémité intrados 74 entre un tiers et la moitié de la hauteur H de la dernière spire 702. La face avant 8231 de la collerette 823 est positionnée de manière étanche aux gaz contre cet épaulement annulaire 78 et la hauteur de l'élément saillant 8233 est adaptée en conséquence pour être au contact de l'épaulement 77.

Un quatrième mode de réalisation de la collerette du déflecteur 8 et du tube 7 va maintenant être décrit en faisant référence à la figure 10.

Il diffère du troisième mode de réalisation de la figure 9, en ce que la collerette 823 ne comprend pas d'élément saillant 8233, en ce que la première spire 703 ne comprend pas d'épaulement 77 mais comprend par contre un élément saillant 770.

On comprend aisément que les différents modes de réalisation peuvent être combinés en prévoyant l'épaulement 77 et/ou l'épaulement 78 et les différents éléments formant entretoise 8233 et/ou 770, dès lors que l'on ménage l'espace de circulation 73'.

Enfin, un cinquième mode de réalisation va maintenant être décrit en faisant référence aux figures 11 et 12. Le peigne 9 précité est également utilisé pour former l'interstice 73' de circulation des gaz. Dans ce cas, l'une de ses dents 91 est intercalée (pincée) entre la face arrière 8232 de la collerette 823 et la face avant 71 de la première 703, côté chambre de condensation 26, alors que la collerette 823 repose de manière étanche aux gaz contre la face arrière 72 de la dernière spire 702.

## Revendications

1. Echangeur de chaleur à condensation (10) comprenant :
- au moins un tube (7), enroulé en hélice de façon à former un enroulement hélicoïdal (70) et à l'intérieur duquel circule un fluide à réchauffer, tel que de l'eau, ce tube (7) étant réalisé dans un matériau thermiquement bon conducteur et présentant une face avant (71) et une face arrière (72) opposées, planes ou sensiblement planes, qui sont perpendiculaires, ou approximativement perpendiculaires à l'axe (X-X') dudit enroulement hélicoïdal (70), cet enroulement étant agencé de façon à ménager un interstice (73) entre les spires adjacentes,
- une enveloppe (2) étanche aux gaz à l'intérieur de laquelle ledit au moins un tube (7) est monté, cette enveloppe (2) comprenant un fond (21) et une façade (22) sur laquelle est montée une porte (4), cette enveloppe (2) étant munie d'une manchette d'évacuation des gaz brulés (23),
la face avant (71) du tube (7) étant tournée vers la façade (22) de l'enveloppe (2) et la face arrière (72) du tube (7) étant tournée vers le fond (21) de l'enveloppe (2),
- des moyens (5) d'amenée et/ou de production d'un gaz chaud à l'intérieur de ladite enveloppe, tel un brûleur à gaz ou à fioul (50), montés sur ladite porte (4),
- un déflecteur discoïde (8) étant disposé à l'intérieur de l'enroulement hélicoïdal (70) du tube, de façon à ménager à l'intérieur de l'enveloppe (2), d'une part une chambre de combustion (25) entre la porte (4) et ledit déflecteur (8) et d'autre part, une chambre de condensation (26) entre ledit déflecteur (8) et le fond (21) de l'enveloppe,
ce déflecteur (8) comprenant un disque (81) en matériau thermiquement isolant, porté par une armature (82, 82') en tôle métallique, munie d'une collerette périphérique (823, 823'), cette collerette étant intercalée dans un interstice entre deux spires successives dudit enroulement (70), et le diamètre extérieur (D1) du déflecteur discoïde (8) étant inférieur au diamètre intérieur (D2) de l'enroulement hélicoïdal (70) pris au niveau des extrémités intrados (74) de ses spires, de façon à ménager, entre le bord dudit déflecteur discoïde (8) et l'extrémité intrados (74) de la première spire (703) de l'enroulement se trouvant dans la chambre de condensation (26), un passage dit « de circulation des gaz chauds » (27), ladite collerette (823, 823') présentant une face avant (8231) tournée vers la façade (22) de l'enveloppe (2) et une face arrière (8232) tournée vers le fond (21) de l'enveloppe (2), opposées,
**caractérisé en ce que** ladite face avant (8231) est positionnée de manière étanche aux gaz contre la face arrière (72) de la dernière spire (702) de l'enroulement (70) se trouvant dans la chambre de combustion (25), **en ce qu'**au moins un élément formant entretoise (8233, 770, 91) est disposé entre la face arrière (8232) de ladite collerette (823, 823') et la face avant (71) de la première spire (703) dudit enroulement (70) se trouvant dans la chambre de condensation (26), de façon à ménager entre elles un interstice dit « de circulation des gaz » (73'), de sorte que ces gaz chauds traversent radialement ou approximativement radialement ledit interstice de circulation des gaz (73'), de l'extérieur vers l'intérieur, puis traversent axialement ledit passage de circulation des gaz (27) de l'avant vers l'arrière, en direction de la chambre de condensation (26).

2. Echangeur de chaleur (10) selon la revendication 1, **caractérisé en ce que** la face avant (71) de la première spire (703) de l'enroulement (70) se trouvant dans la chambre de condensation (26) est munie d'un épaulement annulaire (77) qui s'étend depuis l'extrémité intrados (74) de cette spire et **en ce que** ledit au moins un élément formant entretoise (8233, 770) s'étend entre ledit épaulement annulaire (77) et ladite face arrière (8232) de la collerette (823, 823'), de façon à former ledit interstice de circulation (73').

3. Echangeur de chaleur (10) selon la revendication 1 ou 2, **caractérisé en ce que** la face arrière (72) de la dernière spire (702) de l'enroulement se trouvant dans la chambre de combustion (25) est munie d'un épaulement annulaire (78) qui s'étend depuis l'extrémité intrados (74) de cette spire, **en ce que** la face avant (8231) de la collerette (823, 823') est disposée de manière étanche aux gaz contre cet épaulement annulaire (78).

4. Echangeur de chaleur (10) selon l'une des revendications précédentes, **caractérisé en ce que** ledit élément formant entretoise est constitué d'un élément saillant (8233), tel un embouti, formé sur la face arrière (8232) de la collerette (823, 823'), cet élément saillant (8233) étant en appui contre la face avant (71) de la première spire (703) de l'enroulement se trouvant dans la chambre de condensation (26), ou contre l'épaulement annulaire (77) de cette face avant (71), de façon à ménager ledit interstice de circulation des gaz (73').

5. Echangeur de chaleur (10) selon l'une des revendications 1 à 3, **caractérisé en ce que** ledit élément formant entretoise est constitué d'un élément saillant (770), tel un bossage formé dans la paroi du tube (7), cet élément saillant (770) faisant saillie depuis la face avant (71) de la première spire (703) de l'enroulement (70) se trouvant dans la chambre de condensation (26) ou depuis l'épaulement annulaire (77) de cette face avant (71) et **en ce que** cet élément saillant (770) est en appui contre ladite face arrière (8232) de la collerette (823, 823'), de façon à ménager ledit interstice de circulation des gaz (73').

6. Echangeur de chaleur (10) selon l'une des revendications 1 à 3, **caractérisé en ce que** ledit élément formant entretoise est constitué d'un peigne (9) dont une dent (91) est intercalée entre la face avant (71) de la première spire (703) de l'enroulement (70) se trouvant dans la chambre de condensation (26) et la face arrière (8232) de ladite collerette (823, 823'), de façon à ménager ledit interstice (73') de circulation des gaz.

7. Echangeur de chaleur (10) selon l'une des revendications précédentes, **caractérisé en ce que** ladite armature en tôle métallique (82) du déflecteur discoïde (8) présente un fond circulaire (820) bordé par un rebord annulaire (821) perpendiculaire à ce fond, de façon à ménager une cavité discoïde (822) de réception du disque en matériau thermiquement isolant (81) et **en ce que** la collerette périphérique (823, 823') fait saillie vers l'extérieur depuis ce rebord annulaire (821).

8. Echangeur de chaleur (10) selon la revendication 7, **caractérisé en ce que** le disque en matériau thermiquement isolant (81) présente une extrémité saillante (810), qui fait saillie depuis la cavité discoïde (822) vers l'intérieur de la chambre de combustion (25) et **en ce que** le diamètre (D3) de cette extrémité saillante (810) est égal au diamètre intérieur (D2) de l'enroulement hélicoïdal (70) du tube, pris au niveau des extrémités intrados (74) des spires du tube, de sorte que le bord latéral (811) de cette extrémité saillante (810) est en contact étanche aux gaz avec l'extrémité intrados (74) de la dernière spire (702) du tube se trouvant dans la chambre de combustion (25), en empêchant ainsi le passage des gaz chauds entre les deux.

9. Echangeur de chaleur (10) selon l'une des revendications précédentes, **caractérisé en ce qu'**il comprend un tube unique (7) formant l'enroulement hélicoïdal (70) et **en ce que** la collerette périphérique (823) de l'armature (82) en tôle métallique du déflecteur (8) est hélicoïdale.

10. Echangeur de chaleur (10) selon l'une des revendications 1 à 8, **caractérisé en ce qu'**il comprend au moins deux tubes (7) enroulés en hélice pour former au moins deux enroulements hélicoïdaux (70) adjacents, l'un étant disposé dans la chambre de combustion (25) et l'autre dans la chambre de condensation (26) et ce que la collerette périphérique (823') de l'armature (82) en tôle métallique du déflecteur, disposée entre lesdits deux enroulements adjacents (70), est annulaire et perpendiculaire à l'axe (X-X') des deux enroulements hélicoïdaux adjacents (70).

## Patentansprüche

1. Kondensationswärmetauscher (10), umfassend:
- mindestens ein Rohr (7), das derart spiralförmig gewickelt ist, dass eine Spiralwicklung (70) gebildet wird, und in dessen Innerem ein zu erwärmendes Fluid wie Wasser zirkuliert, wobei dieses Rohr (7) aus einem thermisch gut leitenden Material hergestellt ist und eine Vorderseite (71) und eine Rückseite (72) aufweist, die einander gegenüberliegen, eben oder im Wesentlichen eben sind, die senkrecht oder annähernd senkrecht zur Achse (X-X') der spiralförmigen Wicklung (70) sind, wobei diese Wicklung derart eingerichtet ist, dass zwischen den benachbarten Windungen ein Spalt (73) entsteht,
- eine gasdichte Hülle (2), in deren Innerem das mindestens eine Rohr (7) angebracht ist, wobei diese Hülle (2) einen Boden (21) und eine Front (22) umfasst, an der eine Tür (4) angebracht ist, wobei diese Hülle (2) mit einer Manschette (23) zum Ableiten der verbrannten Gase versehen ist,
wobei die Vorderseite (71) des Rohrs (7) der Front (22) der Hülle (2) zugewandt ist und die Rückseite (72) des Rohrs (7) dem Boden (21) der Hülle (2) zugewandt ist,
- Mittel (5) zum Zuführen und/oder Erzeugen eines heißen Gases im Inneren der Hülle, wie ein Gas- oder Ölbrenner (50), die an der Tür (4) angebracht sind,
- einen scheibenförmigen Deflektor (8), der im Inneren der spiralförmigen Wicklung (70) des Rohrs derart angeordnet ist, dass im Inneren der Hülle (2) einerseits eine Brennkammer (25) zwischen der Tür (4) und dem Deflektor (8) und andererseits eine Kondensationskammer (26) zwischen dem Deflektor (8) und dem Boden (21) der Hülle gebildet wird,
wobei dieser Deflektor (8) eine Scheibe (81) aus wärmeisolierendem Material umfasst, die von einer Armierung (82, 82') aus Metallblech getragen wird, die mit einem Umfangskragen (823, 823') versehen ist, wobei dieser Kragen in einen Spalt zwischen zwei aufeinanderfolgenden Windungen der Wicklung (70) eingefügt ist, und der Außendurchmesser (D1) des scheibenförmigen Deflektors (8) kleiner ist als der Innendurchmesser (D2) der spiralförmigen Wicklung (70) im Bereich der inneren Enden (74) ihrer Windungen, so dass zwischen dem Rand des scheibenförmigen Deflektors (8) und dem inneren Ende (74) der ersten Windung (703) der Wicklung, die sich in der Kondensationskammer (26) befindet, ein Durchgang, bezeichnet als "Heißgaszirkulationsdurchgang" (27), gebildet wird, wobei der Kragen (823, 823') eine Vorderseite (8231), die der Vorderseite (22) der Hülle (2) zugewandt ist, und eine Rückseite (8232) aufweist, die dem Boden (21) der Hülle (2) zugewandt ist und sich gegenüberliegen,
**dadurch gekennzeichnet, dass** die Vorderseite (8231) gasdicht an der Rückseite (72) der letzten Windung (702) der Wicklung (70) positioniert ist, die sich in der Brennkammer (25) befindet, dass das mindestens eine Abstandshalterelement (8233, 770, 91) zwischen der Rückseite (8232) des Kragens (823, 823') und der Vorderseite (71) der ersten Windung (703) der Wicklung (70), die sich in der Kondensationskammer (26) befindet, angeordnet ist, so dass zwischen ihnen ein als "Gaszirkulationsspalt" (73') bezeichneter Spalt entsteht, so dass diese heißen Gase den Gaszirkulationsspalt (73') radial oder annähernd radial von außen nach innen durchqueren, dann den Gaszirkulationsdurchgang (27) axial von vorn nach hinten in Richtung der Kondensationskammer (26) durchqueren.

2. Wärmetauscher (10) nach Anspruch 1, **dadurch gekennzeichnet, dass** die Vorderseite (71) der ersten Windung (703) der Wicklung (70), die sich in der Kondensationskammer (26) befindet, mit einer ringförmigen Schulter (77) versehen ist, die sich vom inneren Ende (74) dieser Windung aus erstreckt, und dass sich das mindestens eine Abstandshalterelement (8233, 770) zwischen der ringförmigen Schulter (77) und der Rückseite (8232) des Kragens (823, 823') derart erstreckt, dass der Zirkulationsspalt (73') gebildet wird.

3. Wärmetauscher (10) nach Anspruch 1 oder 2, **dadurch gekennzeichnet, dass** die Rückseite (72) der letzten, in der Brennkammer (25) befindlichen Windung (702) der Wicklung mit einer ringförmigen Schulter (78) versehen ist, die sich vom inneren Ende (74) dieser Windung aus erstreckt, dass die Vorderseite (8231) des Kragens (823, 823') gasdicht an dieser ringförmigen Schulter (78) angeordnet ist.

4. Wärmetauscher (10) nach einem der vorhergehenden Ansprüche, **dadurch gekennzeichnet, dass** das Abstandshalterelement aus einem vorspringenden Element (8233) wie ein Tiefziehteil besteht, das an der Rückseite (8232) des Kragens (823, 823') ausgebildet ist, wobei dieses vorspringende Element (8233) an der Vorderseite (71) der ersten Windung (703) der Wicklung, die sich in der Kondensationskammer (26) befindet, oder an der ringförmigen Schulter (77) dieser Vorderseite (71) derart anliegt, dass der Gaszirkulationsspalt (73') eingerichtet wird.

5. Wärmetauscher (10) nach einem der Ansprüche 1 bis **3, dadurch gekennzeichnet, dass** das Abstandshalterelement aus einem vorspringenden Element (770) wie ein in der Rohrwand (7) ausgebildeter Buckel gebildet ist, wobei dieses vorstehende Element (770) von der Vorderseite (71) der ersten Windung (703) der Wicklung (70), die sich in der Kondensationskammer (26) befindet, oder von der ringförmigen Schulter (77) dieser Vorderseite (71) vorsteht, und dass dieses vorstehende Element (770) an der Rückseite (8232) des Kragens (823, 823') derart anliegt, dass der Gaszirkulationsspalt (73') eingerichtet wird.

6. Wärmetauscher (10) nach einem der Ansprüche 1 bis 3, **dadurch gekennzeichnet, dass** das Abstandshalterelement aus einem Kamm (9) besteht, von dem ein Zahn (91) zwischen der Vorderseite (71) der ersten Windung (703) der Wicklung (70), die sich in der Kondensationskammer (26) befindet, und der Rückseite (8232) des Kragens (823, 823') derart eingefügt ist, dass der Gaszirkulationsspalt (73') eingerichtet wird.

7. Wärmetauscher (10) nach einem der vorhergehenden Ansprüche, **dadurch gekennzeichnet, dass** die Armierung aus Metallblech (82) des scheibenförmigen Deflektors (8) einen kreisförmigen Boden (820) aufweist, der von einem ringförmigen Rand (821) senkrecht zu diesem Boden derart begrenzt wird, dass ein scheibenförmiger Hohlraum (822) zur Aufnahme der Scheibe aus wärmeisolierendem Material (81) eingerichtet wird, und dass der Umfangskragen (823, 823') von diesem ringförmigen Rand (821) nach außen vorspringt.

8. Wärmetauscher (10) nach Anspruch 7, **dadurch gekennzeichnet, dass** die Scheibe aus wärmeisolierendem Material (81) ein vorstehendes Ende (810) aufweist, das von dem scheibenförmigen Hohlraum (822) in das Innere der Brennkammer (25) vorsteht, und dass der Durchmesser (D3) dieses vorstehenden Endes (810) gleich dem Innendurchmesser (D2) der spiralförmigen Wicklung (70) des Rohrs, ermittelt an den inneren Enden (74) der Windungen des Rohrs, ist, so dass die Seitenkante (811) dieses vorstehenden Endes (810) in gasdichtem Kontakt mit dem inneren Ende (74) der letzten Windung (702) des Rohrs steht, die sich in der Brennkammer (25) befindet, wodurch der Durchgang der heißen Gase zwischen den beiden verhindert wird.

9. Wärmetauscher (10) nach einem der vorhergehenden Ansprüche, **dadurch gekennzeichnet, dass** er ein einzelnes Rohr (7) umfasst, das die Spiralwicklung (70) bildet, und dass der Umfangskragen (823) der Armierung (82) aus Metallblech des Deflektors (8) spiralförmig ist.

10. Wärmetauscher (10) nach einem der Ansprüche 1 bis 8, **dadurch gekennzeichnet, dass** er mindestens zwei Rohre (7) umfasst, die spiralförmig gewickelt sind, um mindestens zwei benachbarte Spiralwicklungen (70) zu bilden, wobei eine in der Brennkammer (25) und die andere in der Kondensationskammer (26) angeordnet ist, und dass der Umfangskragen (823') der Armierung (82) aus Metallblech des Deflektors, der zwischen den beiden benachbarten Wicklungen (70) angeordnet ist, ringförmig und senkrecht zur Achse (X-X') der beiden benachbarten spiralförmigen Wicklungen (70) ist.

## Claims

1. A condensation heat exchanger (10) comprising:
- at least one tube (7), helically wound so as to form a helical winding (70) and inside which a fluid to be heated such as water circulates, this tube (7) being made of a thermally good conductive material and having a planar or substantially planar front face (71) and a planar or substantially planar rear face (72) opposite to each other and perpendicular or approximately perpendicular to the axis (X-X') of said helical winding (70), this winding being arranged so as to provide an interstice (73) between the adjacent turns,
- a gas-tight casing (2) inside which said at least one tube (7) is mounted, this casing (2) comprising a bottom (21) and a facade (22) on which a door (4) is mounted, this casing (2) being provided with a sleeve (23) for discharging burnt gases,
the front face (71) of the tube (7) being turned towards the facade (22) of the casing (2) and the rear face (72) of the tube (7) being turned towards the bottom (21) of the casing (2),
- means (5) for supplying and/or producing a hot gas inside said casing, such as a gas or oil burner (50), mounted on said door (4),
- a discoid deflector (8) being disposed inside the helical winding (70) of the tube, so as to provide inside the casing (2), on the one hand a combustion chamber (25) between the door (4) and said deflector (8), and on the other hand a condensation chamber (26) between said deflector (8) and the bottom (21) of the casing, this deflector (8) comprising a disk (81) made of thermally insulating material, carried by a sheet metal frame (82, 82') provided with a peripheral flange (823, 823'), this flange being interposed in an interstice between two successive turns of said winding (70), and the external diameter (D1) of the discoid deflector (8) being smaller than the internal diameter (D2) of the helical winding (70) taken at the intrados ends (74) of its turns, so as to provide, between the edge of said discoid deflector (8) and the intrados end (74) of the first turn (703) of the winding located in the condensation chamber (26), a passage called "hot gas circulation" passage (27), said flange (823, 823') having a front face (8231) turned towards the facade (22) of the casing (2) and a rear face (8232) turned towards the bottom (21) of the casing (2), opposite to each other,
**characterized in that** said front face (8231) is positioned in a gas-tight manner against the rear face (72) of the last turn (702) of the winding (70) located in the combustion chamber (25), **in that** at least one spacer element (8233, 770, 91) is disposed between the rear face (8232) of said flange (823, 823') and the front face (71) of the first turn (703) of said winding (70) located in the condensation chamber (26), so as to provide therebetween an interstice called "gas circulation" interstice (73'), so that these hot gases radially or approximately radially pass through said gas circulation interstice (73'), from outside to inside, then axially pass through said gas circulation passage (27) from front to back, in the direction of the condensation chamber (26).

2. The heat exchanger (10) according to claim 1, **characterized in that** the front face (71) of the first turn (703) of the winding (70) located in the condensation chamber (26) is provided with an annular shoulder (77) which extends from the intrados end (74) of this turn and **in that** said at least one spacer element (8233, 770) extends between said annular shoulder (77) and said rear face (8232) of the flange (823, 823'), so as to form said gas circulation interstice (73').

3. The heat exchanger (10) according to claim 1 or 2, **characterized in that** the rear face (72) of the last turn (702) of the winding located in the combustion chamber (25) is provided with an annular shoulder (78) which extends from the intrados end (74) of this turn, **in that** the front face (8231) of the flange (823, 823') is disposed in a gas-tight manner against this annular shoulder (78).

4. The heat exchanger (10) according to any of the preceding claims, **characterized in that** said spacer element consists of a protruding element (8233), such as a stamping, formed on the rear face (8232) of the flange (823, 823'), this protruding element (8233) bearing against the front face (71) of the first turn (703) of the winding located in the condensation chamber (26), or against the annular shoulder (77) of this front face (71), so as to provide said gas circulation interstice (73').

5. The heat exchanger (10) according to any of claims 1 to 3, **characterized in that** said spacer element consists of a protruding element (770), such as a boss, formed in the wall of the tube (7), this protruding element (770) protruding from the front face (71) of the first turn (703) of the winding (70) located in the condensation chamber (26) or from the annular shoulder (77) of this front face (71) and **in that** this protruding element (770) is bearing against said rear face (8232) of the flange (823, 823'), so as to provide said gas circulation interstice (73').

6. The heat exchanger (10) according to any of claims 1 to 3, **characterized in that** said spacer element consists of a comb (9) having a tooth (91) interposed between the front face (71) of the first turn (703) of the winding (70) located in the condensation chamber (26) and the rear face (8232) of said flange (823, 823'), so as to provide said gas circulation interstice (73').

7. The heat exchanger (10) according to any of the preceding claims, **characterized in that** said sheet metal frame (82) of the discoid deflector (8) has a circular bottom (820) bordered by an annular rim (821) perpendicular to this bottom, so as to provide a discoid cavity (822) for receiving the disk made of thermally insulating material (81) and **in that** the peripheral flange (823, 823') protrudes outwards from this annular rim (821).

8. The heat exchanger (10) according to claim 7, **characterized in that** the disk made of thermally insulating material (81) has a protruding end (810) which protrudes from the discoid cavity (822) inwardly of the combustion chamber (25) and **in that** the diameter (D3) of this protruding end (810) is equal to the internal diameter (D2) of the helical winding (70) of the tube, taken at the intrados ends (74) of the turns of the tube, so that the lateral edge (811) of this protruding end (810) is in gas-tight contact with the intrados end (74) of the last turn (702) of the tube located in the combustion chamber (25), thus preventing the passage of hot gases between the two.

9. The heat exchanger (10) according to any of the preceding claims, **characterized in that** it comprises a single tube (7) forming the helical winding (70) and **in that** the peripheral flange (823) of the sheet metal frame (82) of the deflector (8) is helical.

10. The heat exchanger (10) according to any of claims 1 to 8, **characterized in that** it comprises at least two tubes (7) helically wound to form at least two adjacent helical windings (70), one being disposed in the combustion chamber (25) and the other being disposed in the condensation chamber (26) and **in that** the peripheral flange (823') of the sheet metal frame (82) of the deflector, disposed between said two adjacent windings (70), is annular and perpendicular to the axis (X-X') of the two adjacent helical windings (70).
